(19) Europäisches Patentamt
European Patent Office
Office européen des brevets

(11) **EP 2 669 974 A1**

(12) **EUROPEAN PATENT APPLICATION**
published in accordance with Art. 153(4) EPC

(43) Date of publication:
**04.12.2013 Bulletin 2013/49**

(51) Int Cl.:
*H01M 4/58* (2010.01)  *C01B 17/22* (2006.01)
*C01B 31/02* (2006.01)  *H01M 4/36* (2006.01)

(21) Application number: **12739459.1**

(22) Date of filing: **25.01.2012**

(86) International application number:
**PCT/JP2012/000467**

(87) International publication number:
**WO 2012/102037 (02.08.2012 Gazette 2012/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2011 JP 2011015294
02.09.2011 JP 2011191284**

(71) Applicant: **Idemitsu Kosan Co., Ltd.
Chiyoda-ku
Tokyo 100-8321 (JP)**

(72) Inventors:
• **YANAGI, Kazuaki**
  **Sodegaura-shi**
  **Chiba 299-0293 (JP)**

• **SENGA, Minoru**
  **Sodegaura-shi**
  **Chiba 299-0293 (JP)**
• **ABURATANI, Ryo**
  **Sodegaura-shi**
  **Chiba 299-0293 (JP)**
• **OTA, Tsuyoshi**
  **Sodegaura-shi**
  **Chiba 299-0293 (JP)**

(74) Representative: **Clarke, Lionel Paul
Gill Jennings & Every LLP
The Broadgate Tower
20 Primrose Street
London EC2A 2ES (GB)**

(54) **COMPOSITE MATERIAL OF ALKALI METAL SULFIDE AND CONDUCTING AGENT**

(57) A composite material including a conducting material and an alkali metal sulfide formed integrally on the surface of the conducting material.

FIG.1

**Description**

Technical Field

The invention relates to a composite material and its production method, an electrode containing the composite material, and a lithium ion battery provided with the electrode.

Background Art

With development of mobile communications and information electronic devices in recent years, there has been a tendency that the demand for high- capacity and lightweight lithium secondary batteries increases. Most electrolytes having a high lithium ion conductivity at room temperature are liquid, and many of commercially-available rechargeable lithium-ion batteries use an organic electrolyte solution. In a lithium secondary battery using such an organic electrolyte solution, there is a danger of leakage, ignition and explosion and, under such circumstances, a battery with a higher degree of safety has been desired. Although there is an advantage that leakage or ignition of an electrolyte is unlikely to occur in all-solid batteries which use a solid electrolyte, since the ionic conductivity of a solid electrolyte is generally low, practical use of all-solid batteries using a solid electrolyte is difficult.

In an all-solid lithium battery using a solid electrolyte, as a solid electrolyte showing a high ionic conductivity of $10^{-3}$S cm$^{-1}$ at room temperature, a lithium ion-conductive ceramic based on $Li_3N$ has conventionally been known. This ceramic, due to the low decomposition voltage thereof, could not form a battery which operates at 3V or more.

As a sulfide-based solid electrolyte, a solid electrolyte having an ionic conductivity in the order of $10^{-4}$ Scm$^{-1}$ is disclosed in Patent Document 1, and a solid electrolyte formed of $Li_2S$ and $P_2S_5$ having an ionic conductivity in the order of $10^{-4}$ Scm$^{-1}$ is similarly disclosed in Patent Document 2. Furthermore, in Patent Document 3, sulfide-based crystallized glass which is formed of $Li_2S$ and $P_2S_5$ in an amount ratio of 68 to 74 mol%:26 to 32 mol% having an ionic conductivity of $10^{-3}$ Scm$^{-1}$ has been realized.

Although it was also possible to manufacture all-solid lithium batteries using the above-mentioned sulfide-based solid electrolyte, a cathode of conventional solid lithium batteries was manufactured using an oxide-based cathode active material such as LCO and a sulfide-based solid electrolyte (Patent Document 4).

The theoretical capacity of LCO or the like is low, and hence, it cannot obtain an all-solid lithium battery having a high capacity. On the other hand, Patent Document 5 discloses an all-solid lithium battery which uses, for a cathode, sulfur having a high theoretical capacity, carbon and an inorganic solid electrolyte.

In the all-solid lithium battery disclosed in Patent Document 2, since lithium ions are not contained in a cathode active material, an anode requires an anode active material which supplies lithium ions to a cathode, and since there are few such anode active materials, there was a defect that there is little room for selection.

In addition, metal lithium can be given as an anode active material which supplies lithium ions to a cathode. However, metal lithium has a defect that, when charge and discharge are conducted, a sulfide-based solid electrolyte reacts with the metal lithium.

Here, the anode active material which supplies lithium ions to a cathode means an anode active material which performs not charging but discharging at the initial stage after the manufacture.

Moreover, although a technology in which amorphous lithium sulfide having a high theoretical capacity is mixed with a conducting agent to obtain a cathode has been disclosed (Patent Document 6), this technology has a defect that the lithium ion battery using such a cathode has poor battery performance.

Here, lithium sulfide serves as a cathode active material which supplies lithium ions to an anode.

Here, the cathode active material which supplies lithium ions to an anode means a cathode active material which performs not discharging but charging at the initial stage after the manufacture.

Related Art Documents

Patent Documents

Patent Document 1: JP-A-H04-202024
Patent Document 2: JP-A-2002-109955
Patent Document 3: JP-A-2005-228570
Patent Document 4: JP-A-2008-226639
Patent Document 5: JP-A-2010-95390
Patent Document 6: JP-A-2006-32143

## EP 2 669 974 A1

Summary of the Invention

An object of the invention is to provide an anode material which has a high theoretical capacity and can use an anode active material which does not supply lithium ions to a cathode and a lithium ion battery.

According to the invention, the following composite material or the like are provided.

1. A composite material comprising a conducting material and an alkali metal sulfide formed integrally on the surface of the conducting material.

2. A composite material comprising a conducting material and an alkali metal sulfide, wherein a half width of a peak of the alkali metal measured by an X-ray diffraction is 0.370° or more.

3. A composite material comprising a conducting material and an alkali metal sulfide, wherein a half width of a peak of the alkali metal measured by an X-ray diffraction is 0.370° or more and 2.00° or less.

4. The composite material according to any of 1 to 3, wherein the conducting material is a carbon material and the alkali metal sulfide is lithium sulfide.

5. A method for producing a composited material of a conducting material and an alkali metal sulfide comprising the steps of:

preparing a solution containing a conducting material and raw materials of an alkali metal sulfide; and
reacting the raw materials of an alkali metal sulfide to allow the alkali metal sulfide to be formed integrally on the surface of the conducting agent

6. A composite material produced by the production method according to 5.

7. An electrode material comprising the composite material according to any of 1 to 4 and 6.

8. An electrode comprising the composite material according to any of 1 to 4 and 6.

9. An electrode produced by using the composite material according to any of 1 to 4 and 6 or the electrode material according to 7.

10. A lithium ion battery comprising the electrode according to 8 or 9.

According to the invention, a cathode material which has a high theoretical capacity and can use an anode active material which does not supply lithium ions to a cathode and a lithium ion battery can be provided.

Brief Description of the Drawings

FIG 1 is a TEM photograph of the composite material manufactured in Example 1;
FIG. 2 is a TEM photograph of the composite material manufactured in Example 1;
FIG. 3 is TEM-EDS analysis results of the composite material manufactured in Example 1;
FIG. 4 is a charge/discharge cycle evaluation results of the battery which use the composite material manufactured in Example 3;
FIG 5 is a TEM photograph of the composite material manufactured in Comparative Example 1;
FIG 6 is TEM-EDS analysis results of the composite material manufactured in Comparative Example 1; and
FIG 7 is analysis results of an X-ray diffraction measurement of the composite material manufactured in Example 4, and its enlarged view.

Mode for Carrying out the Invention

1. Composite material

The composite material of the invention comprises a conducting agent and an alkaline metal sulfide. In the first composite material of the invention, the above-mentioned alkaline metal sulfide is formed integrally on the surface of the above-mentioned conducting agent.
Here, the surface of the conducting agent is a surface measured by a specific surface area analysis, and specifically a surface which serves as a BET specific surface area.

As for the first composite material of the invention, it is preferred that the alkali metal sulfide be integrated with 0.01% or more of the surface of the conducting agent, and it is more preferred that the alkali metal sulfide be integrated with 1% or more of the surface of the conducting agent.
It is preferred that a part in which the alkali metal sulfide is not integrated with the surface of the conducting agent be 1% or less (a part in which the alkali metal sulfide is integrated with the surface of the conducting agent is 99% or more of the entire surface) of the entire surface. It is more preferred that a part in which the alkali metal sulfide is not integrated with the surface of the conducting agent be 0.01% or less (a part in which the alkali metal sulfide is integrated with the surface of the conducting agent is 99.99% or more of the entire surface) of the entire surface.

In addition, the part in which the alkali metal sulfide is integrated with the surface of the conducting agent may be the entire surface (100% of the surface of this conducting agent) of this conducting agent

No specific restrictions are imposed on the conducting agent, as long as it is a material having electron conductivity. However, a carbon material is preferable as the conducting material.

It is preferred that the conducting agent have a plurality of fine pores. It is particularly preferred that the conducting agent be a carbon material which has fine pores. Since a carbon material has high conductivity and is lighter than other existing materials having high conductivity, it can allow the power density and the electric capacitance per weight of a battery to be high. The BET specific surface area of the conducting agent is more preferably 0.1 $m^2$/g or more and 5000 $m^2$/g or less, further preferably 1 $m^2$/g or more and 4000 $m^2$/g or less, further preferably 1 $m^2$/g and 3000 $m^2$/g or less and most preferably 10 $m^2$/g or more and 3000 $m^2$/g or less.

If the BET specific surface area is less than 0.1 $m^2$/g, the conducting material may tend to be hardly integrated with an alkali metal sulfide. If the BET specific surface area exceeds 5000 $m^2$/g, the conducting agent may become bulky to make handling difficult.

The pore volume of the conducting agent is preferably 0.1 cc/g or more and 5.0 cc/g or less. When the pore volume is less than 0.1 cc/g, there is a possibility that the conducting agent may hardly be integrated with an alkali metal sulfide. If the pore volume exceeds 5.0 cc/g, the conducting agent may become bulky to make handling difficult.

The average diameter of the fine pores of the conducting agent is preferably 0.1 nm or more and 40 nm or less, more preferably 0.5 nm or more and 40 nm or less, further preferably 0.5 nm or more and 20 nm or less, and most preferably 1 nm or more and 20 nm or less. By allowing the average diameter of fine pores to be such values, it is possible to increase the charge/discharge capacity when the resulting composite material is used in an electrode.

The BET specific surface area, the average diameter of fine pores and the pore volume of fine pores of the conducting agent can be determined by using a nitrogen adsorption isotherm obtained by allowing nitrogen gas to be adsorbed to a composite material under liquid nitrogen. Specifically, the BET specific surface area can be obtained by the BET method, and the average diameter of fine pores can be obtained by the BJH (Barrett-Joyner-Halenda) method. Furthermore, as for the BET specific surface area, the average diameter of fine pores and the pore volume of fine pores of the conducting agent, the specific surface area can be obtained by the Brenauer-Emmet-Telle (BET) method using a nitrogen adsorption isotherm.

The BET specific surface area, the average diameter of fine pores, the diameter of fine pores and the volume of fine pores of the conducting agent can be calculated from the volume of the entire fine pore volume and the BET surface area, assuming that the fine pore has a cylindrical shape.

Measurement can be conducted by using a specific surface area and fine-pore distribution measuring device (Autosorb-3) manufactured by Quantacrome Instruments as a measuring device.

As the carbon material which satisfies the BET specific surface areas, the fine pores, and the fine pore volume as mentioned above, although not particularly limited, carbon black such as Ketjen black, acetylene black, Denka black, thermal black and channel black, meso-porous carbon, activated carbon, amorphous carbon, carbon nanotubes, carbon nanohoms, or the like can be given. As conductive carbon materials, fullerene, carbon fibers, natural graphite, artificial black lead or the like can be given. They can be used singly or in combination of two or more. Moreover, a composite material of these can also be used.

Meso-porous carbon is a carbon material having fine pores two-dimensionally or three-dimensionally which can be obtained by the production method stated in the following documents: S.J. Sang, S.H. Joo, R. Ryoo, et., J. Am. Chem. Soc., 122 (2000) 10712-10713 and T. Yokoi, Y. Sakamoto, O. Terasaki, et., J. Am. Chem. Soc., 128(2006) 13664-13665

No specific restrictions are imposed on the alkali metal sulfide.

For example, lithium sulfide, sodium sulfide, potassium sulfide, rubidium sulfide, cesium sulfide, francium sulfide or the like can be given. Of these, lithium sulfide and sodium sulfide are preferable, with lithium sulfide being more preferable.

Moreover, as for the second composite material of the invention, the half width of a spectral peak of the alkali metal sulfide which is measured by X-ray diffraction (XRD) is 0.370° or more. This shows that the crystal of alkali metal sulfide is finer than that obtained by the conventional simple mixing.

It is preferred that the half width of a spectral peak of the alkali metal sulfide be 0.400° or more, further preferably 0.500° or more.

A case where lithium sulfide is used as the alkali metal sulfide will be explained in detail below.

It is preferred that the XRD (CuK$\alpha$: $\lambda$= 1.5418Å) of lithium sulfide has a peak at $2\theta$ = 26.8, 31.0, 44.6 and 52.8°, and the half width of a peak in the vicinity of $2\theta$=44.6 is 0.370° or more. If it is less than 0.370°, the charge/ discharge capacity may become small.

The half width of a peak in the vicinity of 2θ=44.6 is more preferably 0.400° or more, with 0.500° or more being further preferable.

As for the third composite material of the invention, the half width of a spectral peak of the alkali metal sulfide which is measured by X-ray diffraction (XRD) is 0.370° or more and 2.00° or less. This shows that the crystal of alkali metal sulfide is finer than that obtained by the conventional simple mixing.

If the half width of a spectral peak of the alkali metal sulfide is 2.00° or less, production may be conducted easily.

The half width of a peak of alkali metal sulfide which is measured by X-ray diffraction (XRD) is more preferably 0.370° or more and 1.80° or less, with 0.370° or more and 1.50° or less being further preferable.

A case where lithium sulfide is used as the alkali metal sulfide will be explained in detail below.

It is preferred that the XRD (CuKα:λ=1.5418Å) of lithium sulfide has a peak at 2θ = 26.8, 31.0, 44.6 and 52.8°, and the half width of a peak in the vicinity of 2θ = 44.6 is 0.370° or more and 2.00° or less. If it is less than 0.370°, the charge/discharge capacity may become small.

The half width of a peak in the vicinity of 2θ=44.6 is more preferably 0.370° or more and 1.80° or less, with 0.370° or more and 1.50° or less being further preferable.

The composite material of the invention can be produced by manufacturing an alkali metal sulfide in the co-presence of a conducting agent. Specifically, it can be produced by a manufacturing method having the following steps.

(1) A step in which a solution containing a conducting material and raw materials of an alkali metal sulfide is prepared; and

(2) A step in which the raw materials of an alkali metal sulfide are reacted to allow the alkali metal sulfide to be formed integrally on the surface of the conducting agent.

The conducting agent and the alkali metal are as mentioned above.

The raw materials of the alkali metal sulfide are a compound containing an alkali metal element and a compound containing sulfur or a sulfur element. As the raw materials of the alkali metal sulfide, the following (i) to (iv) can be given, for example.

(i) Sulfur and a reductive alkali metal compound can be used as the raw materials. As the reductive alkali metal compound, alkali metal hydride (alkali metal borohydride ($XBHEt_3$, $XBH_4$ in which X is an alkali metal), alkali metal aluminum hydride ($XAlH_4$ in which X is an alkali metal) can be given.

(ii) Hydrogen sulfide and an alkyl alkali metal compound can be used as the raw material. As the alkyl alkali metal, alkyllithium, alkyl sodium, alkyl potassium, alkyl rubidium, alkyl cesium, alkyl francium or the like can be given. As the alkyllithium, n-butyllithium, s-butyllithium, t-butyllithium, ethyllithium, methyllithium, or the like can be given.

(iii) Hydrogen sulfide and an alkali metal hydroxide can be used as the raw materials. As the alkali metal hydroxide, lithium hydroxide, sodium hydroxide, potassium hydroxide, rubidium hydroxide, cesium hydroxide, francium hydroxide or the like can be given.

(iv) Hydrogen sulfide and an alkali metal sulfide can be used as the raw materials. As an alkaline metal hydrosulfide, lithium hydrosulfide, sodium hydrosulfide, potassium hydrosulfide, rubidium hydrosulfide, cesium hydrosulfide, francium hydrosulfide or the like can be given.

When the alkali metal sulfide is lithium sulfide, it is preferable to use the following production method (1) or (2).

(1) Method for producing a composite material in which sulfur and a reductive agent are reacted in the co-presence of a conducting agent

As the production method (1), the following methods can be given.

- A method in which, after allowing sulfur to be included in a conducting agent, the resultant is heated in a non-aqueous solvent after adding a reductant solution, thereby to produce lithium sulfide
- A method in which, after adding a conducting agent and sulfur to a non-aqueous solvent to allow the sulfur to be dissolved therein, a reductant solution is added, followed by heating to produce lithium sulfide
- A method in which a conducting agent and sulfur are added to a reductant solution, followed by heating to produce lithium sulfide
- A method in which a conducting agent, sulfur and a reductant are added to a non-aqueous solvent almost simultaneously, followed by heating to produce lithium sulfide

As the conducting agent, the same as mentioned above can be used.

As the non-aqueous solvent, a polar solvent such as THF (tetrahydrofuran), dioxane, ether, acetonitrile, propionitrile, isobutylnitrile or the like can be given. As a non-polar solvent toluene, xylene, ethyl benzene, hexane, heptane, octane, cyclohexane, methyl cyclohexane, petroleum ether or the like can be given, and chloroform, carbon tetrachloride, trichloroethane or the like can be given as a halogen-based solvent.

It is preferred that sulfur have a high degree of purity. Sulfur having a purity of 98% or more is more preferable. No specific restrictions are imposed on the reductant, as long as it is a reductive lithium compound. Super hydride (LiBHEt$_3$, LiBH$_4$), lithium hydride and lithium aluminum hydride or the like can be given. Preferable alkyllithium will be given later.

As the reductant, one obtained by dissolving or dispersing in a suitable non-aqueous solvent can be used. This solvent may be the same or different from a solvent in which a reaction is conducted.

It is preferable to allow 2 equivalent moles or more to be reacted per equivalent mole of sulfur.

The amount of a conducting agent is preferably a conducting agent: lithium sulfide =1:1 -1:5 in terms of mass ratio. If the amount of the conducting agent is larger than this range, the charge/discharge capacity may be small. If the amount of a conducting agent is small, electron conductivity may become poor.

No specific restrictions are imposed on the amount of a conducting agent, sulfur and a reductant relative to the non-aqueous solvent, as long as smooth stirring can be conducted. Depending on the solvent type, a preferable heating temperature on the industrial scale is 20°C or more and 200°C or less. A heating temperature of 45°C or more and 145°C or less is preferable in respect of industrialization. The reaction time is preferably 1 minute or longer, with 5 minutes or more and 24 hours or less being preferable on the industrial basis.

After the reaction, the reaction mixture may be allowed to stand for several minutes to several ten hours, and a reductant remaining unreacted may be removed as a supernatant. Removal of an unreacted reductant may be conducted by washing with a solvent, filtration of solid matters, removal of a supernatant by centrifugal separation or the like.

After removing an un-reacted product, the solvent is removed by vacuum drying at room temperature. According to need, vacuum heating is further conducted to obtain a composite material.

(2) Method for producing a composite material in which alkyllithium and hydrogen sulfide are reacted in the co-presence of a conducing agent

As the production method (2), the following methods can be given.

- A method in which a conducting agent and alkyllithium are added to a non-aqueous solvent, and hydrogen sulfide is circulated with stirring to allow alkyllithium to react with hydrogen sulfide, whereby lithium sulfide is produced.
- A method in which hydrogen sulfide is circulated in a non-aqueous solvent to allow it to be dissolved sufficiently, followed by addition of a conducing agent and alkyllithium, whereby lithium sulfide is produced.

The conducing agent and the non-aqueous solvent are the same as the above.

As the alkyllithium, n-butyllithium, s-butyllithium, t-butyllithium, ethyllithium, methyllithium or the like can be given. N-butyllithium is preferable in respect of industrialization.

No specific restrictions are imposed on hydrogen sulfide as long as it has a high degree of purity. Hydrogen sulfide having purity of 99% or more is more preferable. Hydrogen sulfide is supplied preferably in an amount of 0.5 moles or more per mole of alkyllithium.

The mass ratio of a conducing agent and lithium sulfide generated is as mentioned above.

By allowing a hydrogen sulfide gas to be circulated, the reaction system becomes a hydrogen sulfide gas atmosphere. Since the reaction proceeds quantitatively, it is possible to terminate the reaction by using a hydrogen sulfide gas in a theoretical amount.

However, if alkyllithium remains, it is required to pay attention to a post treatment. Therefore, it is preferred that hydrogen sulfide be used in an amount larger than the alkyllithium theoretical amount by 2 to 50 equivalent%. Since such an excessive amount of hydrogen sulfide is used, it is preferred that an exhaust gas be trapped by an alkaline solution in respect of safety.

By providing a circulation line of hydrogen sulfide, it is possible to make trapping of an alkali solution be unnecessary or be reduced in scale.

No particular restrictions are imposed on the amount of a conducing agent and alkyllithium relative to the non-aqueous solvent. It suffices that stirring be conducted smoothly. The reaction time is preferably several minutes to several hours on the industrial basis. After the reaction, the reaction mixture is allowed to stand for several hours to several tens hours. It is preferred that the unreacted alkyllithium be removed as a supernatant liquid and washed with a solvent twice or more.

After washing, vacuum drying is conducted at room temperature, and solvent is removed by vacuum heating, thereby to obtain a composite material.

It is preferred that the above-mentioned operation be conducted in a saturated vapor pressure or in an inert gas atmosphere. It is preferred that it be conducted in a state which substantially does not exposed to water vapor.

The grain diameter of the composite material of the invention is preferably 0.1 $\mu$m or more and 200 $\mu$m or less.

2. Cathode mix

A cathode mix is obtained by adding a solid electrolyte to the above-mentioned composite material.
Here, the cathode mix is produced by mixing the above-mentioned material and the solid electrolyte. As the method for mixing the cathode material, a method in which the above-mentioned composite material and the solid electrolyte are subjected to a mechanical milling treatment can be mentioned. Depending on the method for mixing the cathode mix, the composite material and the solid electrolyte are coagulated or the like to form secondary particles.

As the solid electrolyte, an inorganic solid electrolyte is preferable. Specific examples thereof include a sulfide-based solid electrolyte such as $Li_2S-P_2S_5$, $LiI-Li_2S-P_2S_5$ and $Li_3PO_4-Li_2S-Si_2S$ and an oxide-based solid electrolyte such as $Li_2O-B_2O_3-P_2O_5$, $Li_2O-SiO_2$, $Li_2O-P_2O_5$ and $Li_2O-B_2O_3-ZnO$.

Of these, a sulfide-based solid electrolyte having a high ionic conductivity is preferable. One having a molar ratio of $Li_2S$ and other sulfide of 50:50 to 95:5 is more preferable.

It is preferred that $Li_2S$ and $P_2S_5$ be raw materials having a molar ratio of $Li_2S:P_2S_5$ of 60:40 to 80:20, with $Li_2S:P_2S_5$ of 65:35 to 75:25 being more preferable.

One having $P_2S_5$ as other sulfide and taking a $Li_7P_3S_{11}$ structure is particularly preferable.

A halide may further be added to the solid electrolyte. As the halide, LiI, LiBr, LiCl or the like can be given. Here, the halide which is added to the solid electrolyte is present in the solid electrolyte as a halide without reacting with raw materials of the solid electrolyte to become another material or without reacting the solid electrolyte itself to become another material.

The solid electrolyte may be in the glass state obtained by a production method such as a MM (mechanical milling) method, a melting method or the like or may be in the glass ceramic state obtained by a heat treatment.

No specific restrictions are imposed on the shape, size or the like of the solid electrolyte. However, one having a primary particle diameter of 0.1 $\mu$m or more and 100 $\mu$m or less is preferable, with 0.1 $\mu$m or less and 20 $\mu$m or less being more preferable.

As for the cathode mix, the mass ratio of the solid electrolyte and the above-mentioned composite material is preferably 9:1 to 1:99. If the amount of the solid electrolyte is larger than this range, the charge/discharge capacity per mass of the electrode may be small. On the other hand, if the amount of the solid electrolyte is small, the ionic conductivity may become poor.

The cathode mix can be produced by a method in which the solid electrolyte and the above-mentioned composite material are conjugated by the MM method, or by other methods.

3. Electrode

The electrode of the invention contains the above-mentioned composite material or the cathode mix.
The electrode of the invention can be produced by a method in which the composite material or the cathode mix of the invention is subjected to press molding by a normal method to obtain a sheet-like electrode, or the other methods.

In the case of the cathode mix, it is preferred that the solid electrolyte in the glass state be pressed while heating at a temperature higher than the glass transition temperature to allow a part or the whole to be fused or allow a part or the whole to become glass ceramic.

Further, a method in which the composite material or the cathode mix is formed in the form of a film on a current collector to form an electrode can be given. As the film-forming method, an aerosol deposition method, a screen printing method, a cold spray method or the like can be given. Further, a method in which the composite material or the cathode mix is dispersed or partially dissolved in a solvent to allow it to be a slurry and the slurry is applied can be given. According to need, a binder may be mixed.

As the above-mentioned current collector, a tabular product, a foil-like product, a mesh-like product or the like which are formed of stainless steel, gold, platinum, copper, zinc, nickel, tin, aluminum, or alloys thereof can be given. When used as an electrode layer, the layer thickness may suitably be selected according to the battery design.

4. Lithium battery

The electrode of the invention can be used as the cathode layer of a lithium ion battery. In this case, as for other configurations of the lithium ion battery, configurations known in this technical field can be used. An anode layer which does not contain lithium ions as an anode active material can be selected.

Further, the anode active material contained in the anode layer of the lithium battery of the invention can be an "anode active material containing lithium ions". Further, the anode active material contained in the anode layer of the lithium battery of the invention may be an "anode active material which supplies lithium ions to the cathode".

No specific restrictions are imposed on the anode, as long as it can be used in normal batteries. It may be composed of an anode mix obtained by mixing an anode active material and a solid electrolyte.

A commercially available anode active material can be used. For example, a carbon material, an Sn metal, an In metal, an Si metal, an alloy of these metals can be used. Specifically, natural graphite or various graphite, powder or metals such as Si, Sn, Al, Sb, Zn and Bi, alloys of metals such as SiAl, $Sn_5Cu_6$, $Sn_2Co$ and $Sn_2Fe$, and other amorphous alloys or plated alloys can be given. No specific restrictions are imposed on the particle diameter, one having an average particle diameter of several $\mu$m to 80 $\mu$m can preferably been used.

No specific restrictions are imposed on the electrolyte layer, and a known electrolyte can be used. For example, an oxide-based solid electrolyte, a sulfide-based solid electrolyte and a polymer-based solid electrolyte are preferable. In respect of ionic conductivity, a sulfide-based solid electrolyte is more preferable. As this sulfide-based solid electrolyte, one used in the above-mentioned cathode mix is preferable.

No specific restrictions are imposed on the method for producing a lithium battery. For example, a method in which a solid electrolyte layer is formed on a sheet obtained by forming a cathode layer made of the electrode of the invention on a cathode current collector, and then a pre-fabricated sheet obtained by forming an anode layer on an anode current collector is stacked, followed by pressing, or the like can be given.

EXAMPLES

[Production of Lithium Sulfide]

Production Example 1

(1) Production of lithium sulfide

Lithium sulfide. was produced by a method in the first embodiment (two-step method) of JP-A-07-330312. Specifically, in a 10 L-autoclave provided with a stirrer, 3326.4g (33.6 mol) of N-methyl-2-pyrrolidone (NMP) and 287.4g (12 mol) of lithium hydroxide were charged, and the resulting mixture was heated to 130°C while stirring at 300 rpm. After heating, hydrogen sulfide was blown to the liquid at a rate of 3 L/min for 2 hours. Subsequently, this reaction liquid was heated in the nitrogen stream (200 cc/min), and hydrogen sulfide was removed from the reacted lithium hydrogen sulfide, thereby to obtain lithium sulfide. As the temperature was raised, water which was generated as a by-product as a result of a reaction of hydrogen sulfide and lithium hydroxide started to evaporate. This water was condensed by a condenser and withdrawn outside the system. Simultaneously with the distilling the water off the outside the system, the temperature of the reaction liquid was increased. When the temperature of the reaction liquid reached 180°C, heating was stopped and the temperature was kept at a constant temperature. The reaction was stopped after (about 80 minutes) the completion of the reaction of removing hydrogen sulfide from lithium hydrosulfide, whereby lithium sulfide was obtained.

(2) Purification of lithium sulfide

NMP in 500 mL of a slurry reaction liquid obtained above (NMP-lithium sulfide slurry) was subjected to decantation. To this slurry reaction liquid, 100 mL of dehydrated NMP was added, followed by stirring at 105°C for about 1 hour. At this temperature, NMP was subjected to decantation. Further, 100 mL of NMP was added, and the resultant was stirred at 105°C for about 1 hour. At that temperature, NMP was subjected to decantation. The similar operation was repeated 4 times in total. After the completion of the decantation, lithium sulfide was dried under normal pressure at 230°C for 3 hours (a temperature which is equal to or higher than the boiling point of NMP) in the nitrogen stream. The content of impurities in the resulting lithium sulfide was measured.

Each sulfur oxide such as lithium sulfate ($Li_2SO_3$), lithium sulfide ($Li_2SO_4$) and lithium thiosulfate ($Li_2S_2O_3$) and lithium N-methylaminolactate (LMAB) was quantified by the ion chromatography method. As a result, the total content of the sulfur oxide was 0.13 mass%, and the content of LMAB was 0.07 mass%. The thus purified $Li_2S$ was used in the following Production Examples and Examples.

Production Example 2

[Production of sulfide-based solid electrolyte glass ceramic ($Li_2S/P_2S_5$ (molar ratio) = 70/30) - mechanical milling method]

32.54g (0.708 mol) of lithium sulfide produced in Production Example 1 and 67.46g (0.304 mol) of phosphorus pentasulfide (manufactured by Sigma-Aldrich Co., Ltd.) were put in a 500 mL-alumina-made container containing 175 alumina balls each having a diameter of 10 mm, and the container was sealed. The above-mentioned measurement and sealing operations were conducted in a glove box, and the equipment used was dried in advance in a drier to remove the water content.

This sealed alumina container was subjected to mechanical milling at room temperature by means of a planetary ball mill (PM400, manufactured by Retsch Co., Ltd.) for 36 hours, thereby to obtain white yellow solid electrolyte glass particles. The recovery ratio at this time was 78%.

The resulting solid electrolyte glass particles were subjected to an X-ray diffraction measurement (CuK$\alpha$: $\lambda$= 1.5418Å). As a result, no peak attributed to the raw material $Li_2S$ was observed. It was a halo pattern attributed to the solid electrolyte glass.

The above-mentioned solid electrolyte glass particles in a SUS-made tube in a glove box in the atmosphere of Ar, and subjected to a heat treatment at 300°C for 2 hours to obtain electrolyte glass ceramic particles (average particle diameter 14.52 $\mu$m). As a result of an X-ray diffraction analysis of these solid electrolyte glass ceramic particles, peaks were observed at $2\theta$= 17.8, 18.2, 19.8, 21.8, 23.8, 25.9, 29.5, 30.0 deg.

From the fact, it can be understood that, in the above-mentioned solid electrolyte glass ceramic particles, $Li_7P_3S_{11}$ crystals were formed.

The conductivity of the solid electrolysis glass ceramic particles was $1.3 \times 10^{-3}$S/cm.

Production Example 3

[Production of sulfide-based solid electrolyte glass ceramic ($Li_2S/P_2S_5$ (molar ratio) = 75/25) - mechanical milling method]

By using the lithium sulfide produced in Production Example 1, sulfide-based glass was produced by a method according to Example 1 of WO07/066539.

Specifically, the production was conducted as follows:

0.383g (0.00833 mol) of lithium sulfide produced in Production Example 1 and 0.618g (0.00278 mol) of phosphorus pentasulfide (manufactured by Sigma-Aldrich Co., Ltd.) were sufficiently mixed. The thus mixed particles and 10 zirconia balls each having a diameter of 10 mm were incorporated in alumina-made pot of a planetary ball mill (P-7, manufactured by Fritsch Japan, Co., Ltd.) and completely sealed. The alumina-made pot was filled with nitrogen to allow it to be a nitrogen atmosphere.

For several minutes from the start, the planetary ball mill was allowed to rotate at a low speed (85 rpm) to attain sufficient mixing of lithium sulfide and phosphorus pentasulfide. Thereafter, the rotation speed of the planetary ball mill was gradually increased to 370 rpm. At a rotation speed of 370 rpm of the planetary ball mill, mechanical milling was conducted for 20 hours. White yellow powder which had been subjected to mechanical milling was evaluated by an X-ray diffraction analysis, and it was confirmed that it was glassified (sulfide glass). As a result of a $^{31}$P-NMR measurement, a main peak was observed at 83.0 ppm. The ionic conductivity of this solid electrolyte glass was $1.3 \times 10^{-4}$ S/cm.

The methods for measuring the properties of the solid electrolyte produced in Production Example 2 and Production Example 3 are as follows:

(1) Measurement of $^{31}$P-NMR spectrum

Measurement was conducted at room temperature in an NMR apparatus (JNM-CMXP302 manufactured by JEOL Ltd.) which was provided with a 5 mmCP/MAS probe. A $^{31}$P-NMR spectrum was measured by the single pulse method with a 90° pulse of 4 $\mu$s and a rotation of a magic angle of 8.6 kHz.

The chemical shift was measured by using ammonium hydrogen phosphate as an external standard (1.3 ppm). The measurement range was 0 ppm to 150 ppm.

(2) Ionic conductivity ($\sigma$)

The sample was shaped into a cylindrical form having a cross section of 10 mm in diameter (cross section S = 0.785 cm$^2$) and a height (L) of 0.1 to 0.3 cm. An electrode terminal was removed from the upper and lower sides of the sample, and measurement was conducted by the alternate current impedance method (frequency range: 5 MHz to 0.5 Hz, amplitude: 10 mV), whereby a Cole-Cole plot was obtained. A real part Z' ($\Omega$) at a point at which -Z'' ($\Omega$) became minimum in the vicinity of the right end of a circle observed in a high-frequency region was taken as the bulk resistance R ($\Omega$) of the electrolyte, the ionic conductivity ($\sigma$) (S/cm) was calculated according to the following formula:

$$R = \rho \, (L/S)$$

$$\sigma = 1/\rho$$

The distance between the leads was about 60 cm.

Example 1

0.5g of sulfur (manufactured by Sigma-Aldrich Co., Ltd., purity: 99.998%, the same applies to the sulfur used in Example 2 and the examples subsequent to Example 2) and 0.5g of ketjen black (EC600JD manufactured by Lion Corporation, having an average fine pore diameter of 12.7 nm and a BET specific surface area of 1365 $m^2$/g. In Example 2 and subsequent examples to Example 2, the same ketjen black was used) were mixed in a planetary ball mill for 5 hours. In 47 ml of THF (tetrehydrofuran (203-13965 manufactured by Wako pure chemical Industries, Ltd. In Example 2 and subsequent examples to Example 2, the same THF was used), 0.5g of the above mixture was added. To the resulting mixture, 15.6 ml of a 1.0M TEBHLi (lithium triethylbarohydride) solution (solvent THF) having a molar concentration by volume of 1.0 (product number: 179728, manufactured by Sigma-Aldrich Co., Ltd.) was added, and the resultant was heated to 65°C, and stirred for 2 hours.

After stirring for 2 hours, the solution was allowed to stand for 24 hours. Thereafter, a supernatant was removed, and a THF was added thereto to allow the unreacted TEBHLi to be dissolved in this THF to remove the unreacted TEBHLi. The removal operation by THF was conducted twice, and then removal with hexane was repeated twice. Thereafter, the solvent was removed by vacuum drawing at room temperature, and drying was conducted by vacuum heating at 150°C for 2 hours, whereby a lithium sulfide carbon composite was recovered.

For this lithium sulfide carbon composite, the peak half width of the lithium sulfide (hkl=220) was measured by XRD (X-ray diffraction) and found to be 1.295°.
The measurement conditions of XRD are as follows:

Apparatus: Smartlab manufactured by Rigaku Corporation
Tube electrode: 45 kV
Tube current: 200 mA
Slit: Soller slit 5.0°
Scanning speed ($2\theta/\theta$): 2°/min
Step width ($2\theta/\theta$): 0.02°
X-ray source: CuK$\alpha$: $\lambda$ = 1.5418Å

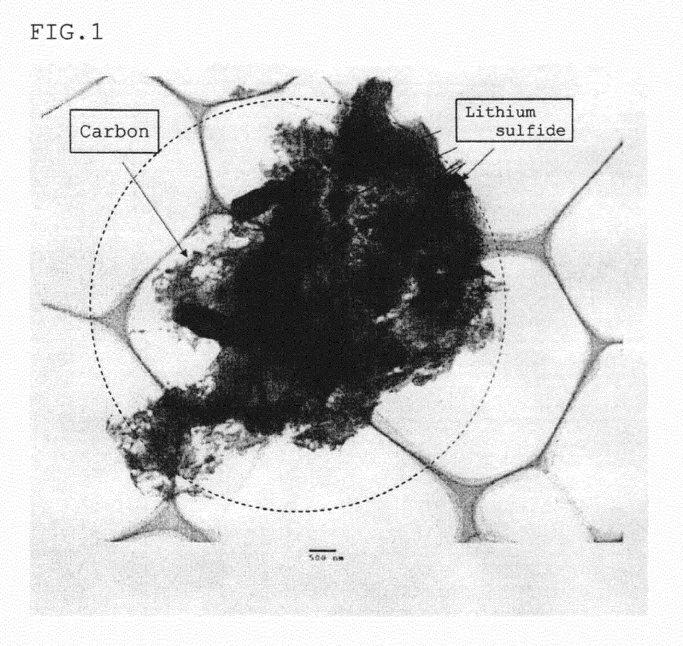

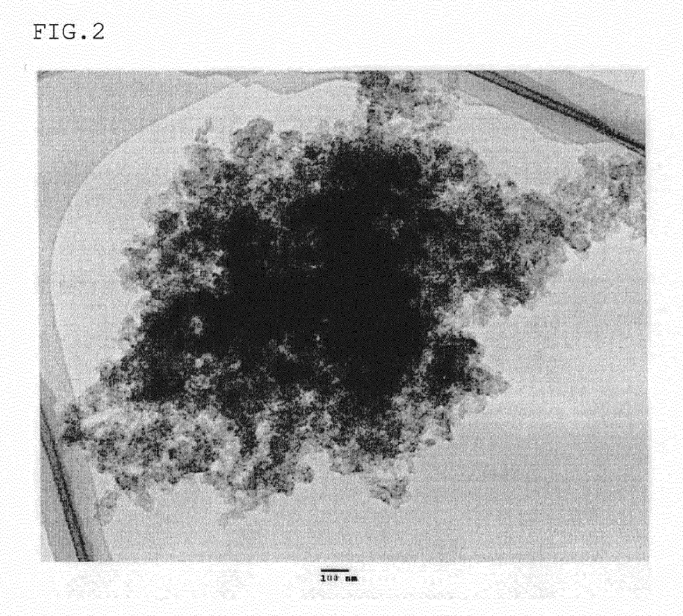

For this lithium sulfide carbon composite, a TEM observation (transmission electron microscopic observation) was conducted. Here, FIGs. 1 and 2 are TEM photographs of different parts of the lithium sulfide carbon composite. As shown in FIGs. 1 and 2, in this lithium sulfide carbon composite, the lithium sulfide was stuck closely to the surface of the ketjen black, whereby it was confirmed that the lithium sulfide was favorably integrated with the ketjen black.
Here, as shown in FIG. 1 and FIG 2, a part having a relatively darker shade indicates the lithium sulfide, and a part having a lighter shade indicates a part where the lithium sulfide is not integrated with the surface of the ketjen black.

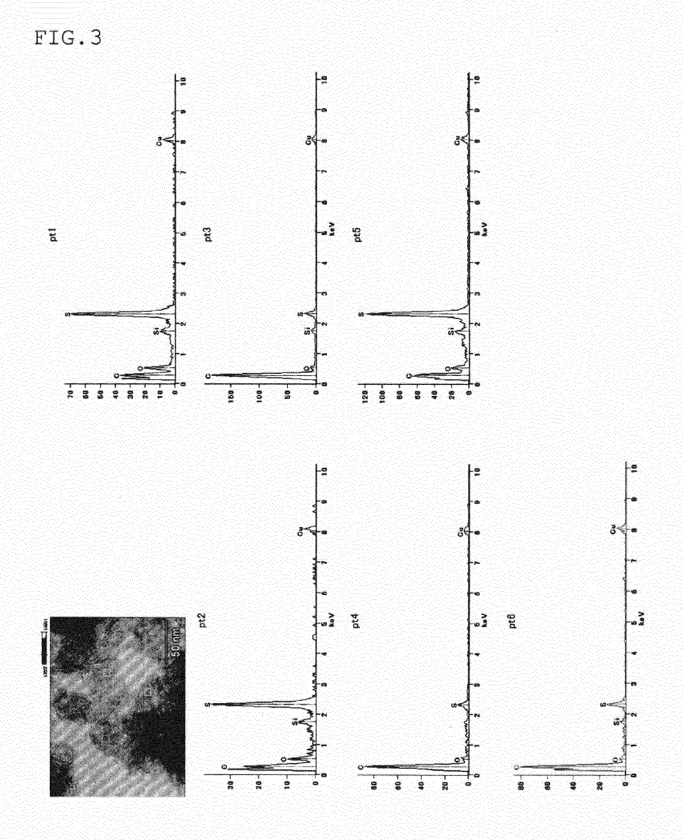

This lithium sulfide carbon composite was analyzed by TEM-EDS (transmission electron microscope-energy dispersion X-ray analysis). The results of the TEM-EDS analysis at arbitral 6 points (acceleration voltage: 200 kV, magnification: 600000) are shown in FIG 3.
In FIG. 3, a peak in the vicinity of 0.3 keV indicates the carbon and a peak in the vicinity of 2.3 keV indicates the sulfur of the lithium sulfide. From the fact that the carbon and the sulfur were detected in all of the 6 points, it can be understood that, in this lithium sulfide carbon composite, the lithium sulfide was stuck to the surface of the ketjen black, indicating that they were favorably integrated.

0.24g of the lithium sulfide carbon composite produced above and 0.20g of solid electrolyte glass  ceramic particles produced in Production Example 2 were mixed in a planetary ball mill for 5 hours, whereby a mixed cathode of the lithium sulfide carbon and the solid electrolyte glass ceramic particles produced in Production Example 2 was prepared.
A lithium battery was prepared by using this mixed cathode in the cathode layer, the solid electrolyte glass ceramic particles produced in Production Example 2 in the electrolyte layer and an In/Li alloy in the anode. The initial charge capacity and the 0.2C charge capacity of the battery were 1193 mAh/g (S) and 1000 mAh/g (S), respectively.

Example 2

0.25g of ketjen black was added to 200 ml of toluene (209-13445, manufactured by Wako pure chemical Industries, Ltd), and 9.8 ml of a 1.6M n-BuLi/hexane solution (04937-25, manufactured by Kanto Chemical Co., Inc) was added. With stirring, hydrogen sulfide was circulated. After allowing to stand for 24 hours, a supernatant was removed, and toluene (209-13445, manufactured by Wako pure chemical Industries, Ltd) was added to remove unreacted n-BuLi. After repeating the removal operation four times, vacuum drawing was conducted at room temperature to remove the solvent. Drying was conducted at 150°C for 2 hours, whereby a lithium sulfide carbon composite was recovered.

The amount of lithium in a supernatant after the reaction was quantified by ICP (induction coupled plasma). As a result, the remaining amount of lithium in the solution was equal to or below the minimum limit of determination of ICP (i.e. 20 wt ppm or less which corresponds to 1.7% or less of the alkyllithium as the raw material), and it could be confirmed that the alkyllithium as the raw material was incorporated into ketjen black almost quantitatively.

For this lithium sulfide carbon composite, the half width of the lithium sulfide (hkl=220) was measured by XRD and found to be 0.533°. The measurement conditions of XRD were similar to those in Example 1.

It could be confirmed by a TEM observation that the lithium sulfide and the ketjen black were integrated favorably, and that the lithium sulfide was stuck to the surface of the ketjen black.

0.24g of the lithium sulfide carbon composite produced above and 0.20g of solid electrolyte glass ceramic particles produced in Production Example 2 were mixed in a planetary ball mill for 5 hours, whereby a mixed cathode of the lithium sulfide carbon and the solid electrolyte glass ceramic particles produced in Production Example 2 was prepared.

A lithium battery was prepared by using this mixed cathode in the cathode layer, the solid electrolyte glass ceramic particles produced in Production Example 2 in the electrolyte layer and an In/Li alloy in the anode.

The initial charge capacity and the 0.2C charge capacity of the battery were 1377 mAh/g (S) and 1200 mAh/g (S), respectively.

Example 3

1.4g of sulfur and 0.6g of ketjen black were mixed in a planetary ball mill for 5 hours. The resulting mixture was placed in a sealed stainless container, and subjected to a heat treatment at 150°C for 6 hours, and then at 300°C for 15 minutes. In 150 ml of THF, 1.2g of the above mixture was added. To the resulting mixture, 30.8 ml of a 1.7M TEBHLi solution (solvent: THF) having a molar concentration by volume of 1.7 (120-05631, manufactured by Wako pure chemical Industries, Ltd., which was identical with the 1.7M TEBHLi solution used in Example 4 and the subsequent Examples to Example 4) was added, and the resultant was heated to 65°C, and stirred for 2 hours.

After stirring for 2 hours, the solution was allowed to stand for 24 hours. Thereafter, a supernatant was removed, and a THF was added thereto to allow the unreacted TEBHli to be dissolved in this THF to remove the unreacted TEBHLi. The removal operation by THF was conducted twice, and then removal with hexane was repeated twice. Thereafter, the solvent was removed by vacuum drawing at room temperature, and drying was conducted by vacuum heating at 150°C for 2 hours and then vacuum heating at 300°C for 2 hours, whereby a lithium sulfide carbon composite was recovered.

For this lithium sulfide carbon composite, the peak half width of the lithium sulfide (hkl=220) by XRD (X-ray diffraction) was measured and found to be 0.736°. The measurement conditions of XRD are the same as those in Example 1.

It could be confirmed by a TEM observation that the lithium sulfide and the ketjen black were integrated favorably, and that the lithium sulfide was stuck to the surface of the ketjen black.

0.39g of the lithium sulfide carbon composite produced above and 0.30g of solid electrolyte glass ceramic particles produced in Production Example 2 were mixed in a planetary ball mill for 5 hours, whereby a mixed cathode of the lithium sulfide carbon and the solid electrolyte glass ceramic particles produced in Production Example 2 was prepared.

A lithium battery was prepared by using this mixed cathode in the cathode layer, the solid electrolyte glass ceramic particles produced in Production Example 2 in the electrolyte layer and an In/Li alloy in the anode.

The initial charge capacity and the 0.2C charge capacity of the battery were 1486 mAh/g (S) and 1330 mAh/g (S), respectively.

After this charge/discharge evaluation, the cycle life of the battery was conducted until 220 cycles.

Evaluation was conducted as follows. 0.1C charge/discharge was conducted until initial 10 cycles, and 0.2C charge/discharge was conducted until 110 cycles. This operation was repeated twice.

1st cycle: 0.1C charge/discharge capacity: 1474 mAh/g (S)
11th cycle: 0.2C charge/discharge capacity 1357 mAh/g (S)

110th cycle: 0.2C charge/discharge capacity 1310 mAh/g (S) 96.5%

111 th cycle: 0.1C charge/discharge capacity 1472 mAh/g (S) 99.8%

121st cycle: 0.2C charge/discharge capacity 1376 mAh/g (S) 101.4%

220th cycle: 0.2C charge/discharge capacity 1286 mAh/g (S) 94.8%

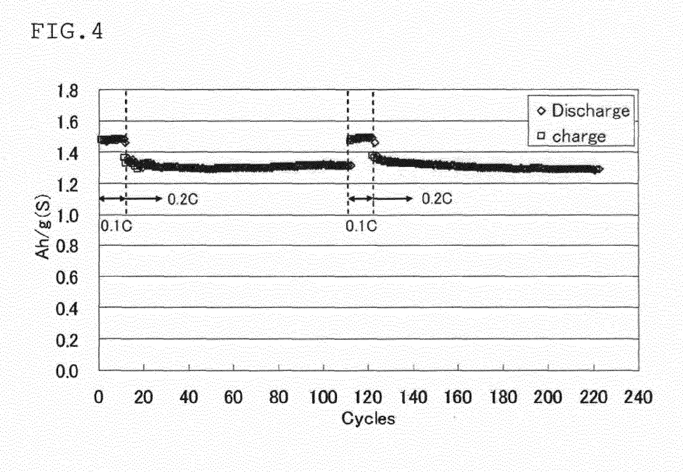

By this evaluation of the cycle life, it could be confirmed that the deterioration of the charge/discharge capacity of the cathode was small, and the cathode was found to be a lithium sulfide cathode improved in cycle life performance. The results of the cycle life performance are shown in FIG. 4.

Comparative Example 1

In 20 ml of xylene (242-00685 manufactured by Wako pure chemical Industries, Ltd), 0.86g of lithium sulfide and 0.60g of ketjen black were added, and mixed in a planetary mill for 5 hours. Thereafter, the solvent was removed by vacuum drawing at room temperature, and drying was conducted by vacuum heating at 200°C for 2 hours, whereby ketjen black to which lithium sulfide was stuck was recovered.

For this ketjen black to which lithium sulfide was stuck, the peak half width of the lithium sulfide (hkl=220) was measured by XRD and found to be 0.366°. The measurement conditions of XRD are the same as those in Example 1.

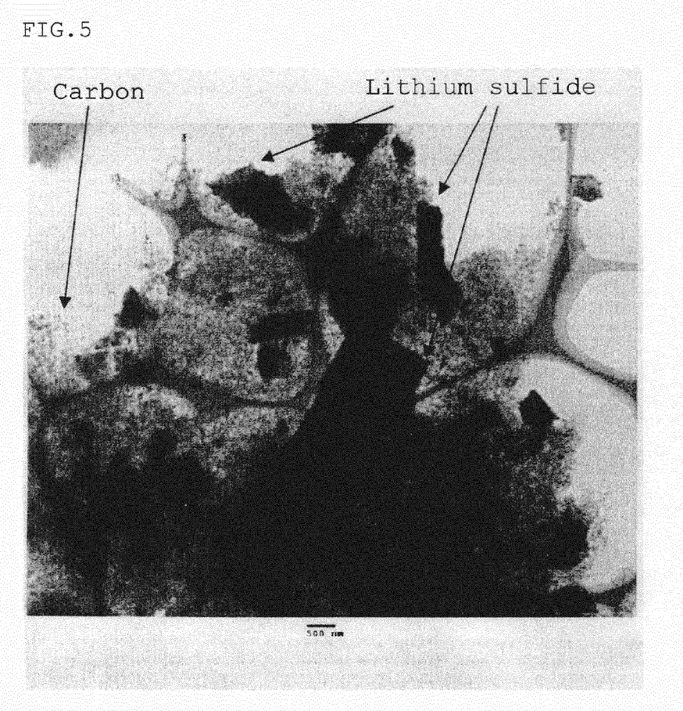

It could be confirmed by a TEM observation that the lithium sulfide stuck to only part of the ketjen black, and that the lithium sulfide and the ketjen black were not integrated. ATEM photograph is shown in FIG. 5.

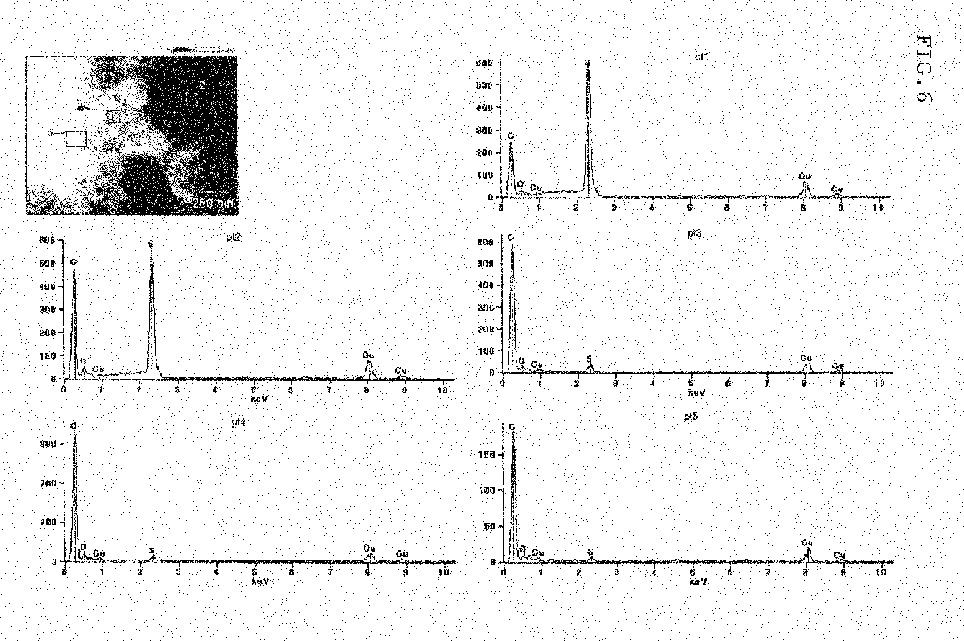

The results of TEM-EDS analysis (acceleration voltage: 200 kV, magnification: 100000) are shown in FIG 6. In arbitral 5 points, there were points at which almost no sulfur was detected as compared with carbon.

0.24g of the "ketjen black to which lithium sulfide was stuck" and 0.20g of the solid electrolyte glass ceramic particles produced in Production Example 2 were mixed for 5 hours, whereby a mixed cathode of the lithium sulfide carbon and the solid electrolyte glass ceramic produced in Production Example 2 was prepared.

A lithium battery was prepared by using this mixed cathode in the cathode layer, the solid electrolyte glass ceramic particles produced in Production Example 2 in the electrolyte layer and an In/Li alloy in the anode.

The initial charge capacity and the 0.2C charge capacity of the battery were 423 mAh/g (S) and 744 mAh/g (S), respectively.

Further, the 1C discharge capacity was 290 mAh/g (S) and the 2C discharge capacity was 120 mAh/g (S).

The method for measuring the 0.2C discharge capacity, the 1C discharge capacity and the 2C discharge capacity was as follows.

For the 0.2C discharge capacity, a discharge capacity was measured to a final voltage of 0.5V at a constant current discharge of 0.785 mA. Similarly, for the 1C discharge capacity, a discharge capacity was measured to a final voltage of 0.5V at a constant current discharge of 3.927 mA. For the 2C discharge capacity, the discharge capacity was measured to a final voltage of 0.5V at a constant current discharge of 7.854 mA. The discharge capacity was measured by means of HJ1005SM8 manufactured by Hokuto Denko Corporation.

TABLE 1

| | Half width measured by XRD (°) | Initial discharge capacity (mAh/g (S)) | 0.2C charge capacity (mAh/g (S)) |
|---|---|---|---|
| Example 1 | 1.295 | 1193 | 1000 |
| Example 2 | 0.533 | 1377 | 1200 |
| Example 3 | 0.736 | 1486 | 1330 |
| Com. Ex. 1 | 0.366 | 423 | 744 |

By the TEM-EDS analysis (FIGs. 3 and 6), it can be understood that while the sulfur was present on the entire surface of the ketjen black in Example 1, the sulfur was present only on part of the ketjen black in Comparative Example 1. Here, lithium components of the lithium sulfide cannot be observed by TEM-EDS, the sulfur components of the lithium sulfide can be measured by TEM-EDS. Therefore, from FIG. 3, it can be understood that, in Example 1, sulfur components were detected on the entire surface of the ketjen black and that the lithium sulfide was present in a wide range. On the other hand, from FIG 6, it can be understood that, in Comparative Example 1, a strong peak attributed to the sulfur appears in a part having a large amount of sulfur components, and a significantly weak peak appears in a part having a small amount of sulfur components as compared with a part having a large amount of sulfur components. It reveals that, since the lithium sulfide and the ketjen black are mixed only by mechanical milling, the lithium sulfide stuck to a part of the surface of the ketjen black in the form of large particles.

Example 4

7.0g of sulfur and 3.0g of ketjen black were mixed in a planetary ball mill for 5 hours. The resulting mixture was placed in a sealed stainless container, and subjected to a heat treatment at 150°C for 6 hours, and then at 300°C for 15 minutes. In 18 ml of THF, 2.12g of the above mixture was added. To the resulting mixture, 60.0 ml of a 1.7M TEBHLi solution was added, and the resultant was heated to 65°C, and stirred for 2 hours.

After stirring for 2 hours, the solution was cooled to room temperature, and 130 ml of THF was added. Then, the mixture was allowed to stand for 24 hours. Thereafter, a supernatant was removed, and THF was added to allow the unreacted TEBHIi to be dissolved in this THF, thereby to remove the unreacted TEBHLi. The removal operation by THF was conducted twice, and then removal with hexane was repeated twice. Thereafter, the solvent was removed by vacuum drawing at room temperature, and drying was conducted by vacuum heating at 150°C for 2 hours and then by vacuum heating at 300°C for 2 hours, whereby a lithium sulfide carbon composite was recovered.

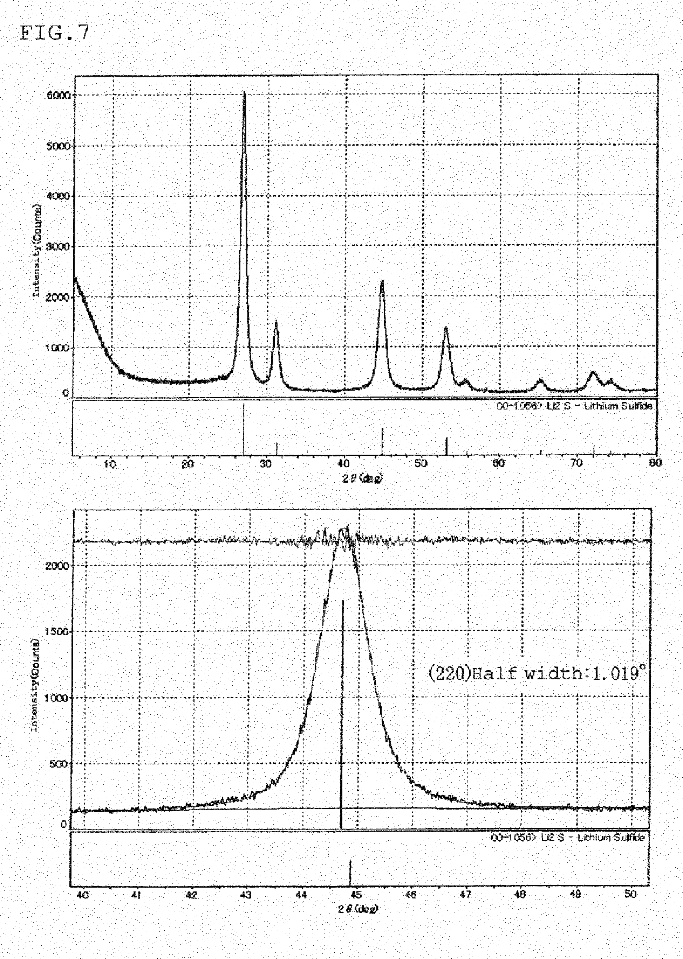

For this lithium sulfide carbon composite, the peak half width of the lithium sulfide (hkl=220) was measured by XRD (X-ray diffraction) and found to be 1.019°. The measurement conditions of XRD are the same as those in Example 1. The results of the XRD measurement and its enlarged view are shown in FIG 7.

It could be confirmed by a TEM observation that the lithium sulfide and the ketjen black were integrated favorably, and that the lithium sulfide was stuck to the surface of the ketjen black.

0.326g of the lithium sulfide carbon composite produced above and 0.250g of solid electrolyte glass ceramic particles produced in Production Example 2 were mixed in a planetary ball mill for 5 hours, whereby a mixed cathode of the lithium sulfide carbon and the solid electrolyte glass ceramic particles produced in Production Example 2 was prepared.

A lithium battery was prepared by using this mixed cathode in the cathode layer, the solid electrolyte glass ceramic particles produced in Production Example 2 in the electrolyte layer and a mix of Si/the solid electrolyte glass ceramic in the anode. As the solid electrolyte glass ceramic, one produced in Production Example 2 was used. The 1C discharge capacity of the battery and the 2C discharge capacity of the battery were 757 mAh/g (S) and 415 mAh/g (S), respectively.

Example 5

7.0g of sulfur and 3.0g of ketjen black were mixed in a planetary ball mill for 5 hours. The resulting mixture was placed in a sealed stainless container, and subjected to a heat treatment at 150°C for 6 hours, and then at 300°C for 15 minutes. In 150 ml of THF, 1.06g of the above mixture was added. To the resulting mixture, 30.0 ml of 1.7M TEBHLi was added, and the resultant was heated to 65°C, and stirred for 2 hours.

After stirring for 2 hours, the solution was allowed to stand for 24 hours. Thereafter, a supernatant was removed, and THF was added to allow the unreacted TEBHLi to be dissolved in this THF, thereby to remove the unreacted TEBHLi. The removal operation by THF was conducted twice, and then removal with hexane was repeated twice. Thereafter, the solvent was removed by vacuum drawing at room temperature, and drying was conducted by vacuum drying at 150°C for 2 hours and then by vacuum heating at 300°C for 2 hours, whereby a lithium sulfide carbon composite was recovered.

For this lithium sulfide carbon composite, the peak half width of the lithium sulfide (hkl=220) was measured by XRD (X-ray diffraction) and found to be 0.907°. The measurement conditions of XRD are the same as those in Example 1. The results are shown in Table 2.

It could be confirmed by a TEM observation that the lithium sulfide and the ketjen black were integrated preferably, and that the lithium sulfide was stuck to the surface of the ketjen black.

A mixed cathode and a lithium battery were prepared in the same manner as in Example 4. The 1C discharge capacity and the 2C discharge capacity of the battery were 729 mAh/g (S) and 367 mAh/g (S), respectively.

Example 6

7.0g of sulfur and 3.0g of ketjen black were mixed in a planetary ball mill for 5 hours. The resulting mixture was placed in a sealed stainless container, and subjected to a heat treatment at 150°C for 6 hours, and then at 300°C for 15 minutes. To 1.42g of the above mixture, 40.0 ml of a 1.7M TEBHLi solution was added, and the resultant was heated to 65°C, and stirred for 2 hours.

After stirring for 2 hours, the solution was cooled to room temperature, and 110 ml of THF was added. Then, the mixture was allowed to stand for 24 hours. Thereafter, a supernatant was removed, and THF was added to allow the unreacted TEBHLi to be dissolved in this THF, thereby to remove the unreacted TEBHLi. The removal operation by THF was conducted twice, and then removal with hexane was repeated twice. Thereafter, the solvent was removed by vacuum drawing at room temperature, and drying was conducted by vacuum heating at 150°C for 2 hours and then by vacuum heating at 300°C for 2 hours, whereby a lithium sulfide carbon composite was recovered.

For this lithium sulfide carbon composite, the peak half width of the lithium sulfide (hkl=220) was measured by XRD (X-ray diffraction) and found to be 1.136°. The measurement conditions of XRD are the same as those in Example 1. It could be confirmed by a TEM observation that the lithium sulfide and the ketjen black were integrated preferably, and that the lithium sulfide was stuck to the surface of the ketjen black.

0.326g of the lithium sulfide carbon composite produced above and 0.250g of solid electrolyte glass ceramic particles produced in Production Example 3 were mixed in a planetary ball mill for 5 hours, whereby a mixed cathode of the lithium sulfide carbon and the solid electrolyte glass ceramic particles produced in Production Example 3 was prepared.

A lithium battery was prepared by using this mixed cathode in the cathode layer, the solid electrolyte glass ceramic particles produced in Production Example 3 in the electrolyte layer and a mix of Si/the solid electrolyte glass ceramic in the anode. As the solid electrolyte glass ceramic, one produced in Production Example 2 was used. The 1C discharge capacity of the battery and the 2C discharge capacity of the battery were 820 mAh/g (S) and 425 mAh/g (S), respectively.

TABLE 2

|  | Half width measured by XRD (°) | 1C charge capacity (mAh/g (S)) | 2C charge capacity (mAh/g (S)) |
|---|---|---|---|
| Example 4 | 1.019 | 757 | 415 |
| Example 5 | 0.907 | 729 | 367 |
| Example 6 | 1.136 | 820 | 425 |
| Com. Ex. 1 | 0.366 | 290 | 120 |

Industrial Applicability

The composite material of the invention can be used in elements of a lithium ion battery.

Although only some exemplary embodiments and/or examples of this invention have been described in detail above, those skilled in the art will readily appreciate that many modifications are possible in the exemplary embodiments and/or examples without materially departing from the novel teachings and advantages of this invention. Accordingly, all such modifications are intended to be included within the scope of this invention.

The documents described in the specification are incorporated herein by reference in its entirety.

**Claims**

1.   A composite material comprising a conducting material and an alkali metal sulfide formed integrally on the surface of the conducting material.

2.   A composite material comprising a conducting material and an alkali metal sulfide, wherein a half width of a peak of the alkali metal measured by an X-ray diffraction is 0.370° or more.

3.   A composite material comprising a conducting material and an alkali metal sulfide, wherein a half width of a peak of the alkali metal measured by an X-ray diffraction is 0.370° or more and 2.00° or less.

4.   The composite material according to any of claims 1 to 3, wherein the conducting material is a carbon material and the alkali metal sulfide is lithium sulfide.

5.   A method for producing a composited material of a conducting material and an alkali metal sulfide comprising the steps of:

preparing a solution containing a conducting material and raw materials of an alkali metal sulfide; and
reacting the raw materials of an alkali metal sulfide to allow the alkali metal sulfide to be formed integrally on the surface of the conducting agent

**6.** A composite material produced by the production method according to claim 5.

**7.** An electrode material comprising the composite material according to any of claims 1 to 4 and 6.

**8.** An electrode comprising the composite material according to any of claims 1 to 4 and 6.

**9.** An electrode produced by using the composite material according to any of claims 1 to 4 and 6 or the electrode material according to claim 7.

**10.** A lithium ion battery comprising the electrode according to claim 8 or 9.

FIG.1

FIG.2

FIG.3

FIG.4

FIG.5

Carbon

Lithium sulfide

500 nm

FIG.6

## FIG.7

## INTERNATIONAL SEARCH REPORT

| | International application No. |
|---|---|
| | PCT/JP2012/000467 |

**A. CLASSIFICATION OF SUBJECT MATTER**
*H01M4/58*(2010.01)i, *C01B17/22*(2006.01)i, *C01B31/02*(2006.01)i, *H01M4/36*(2006.01)i

According to International Patent Classification (IPC) or to both national classification and IPC

**B. FIELDS SEARCHED**

Minimum documentation searched (classification system followed by classification symbols)
H01M4/58, C01B17/22, C01B31/02, H01M4/36

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2010/035602 A1 (National Institute of Advanced Industrial Science and Technology), 01 April 2010 (01.04.2010), claims 1 to 8; paragraphs [0020] to [0036]; examples; drawings (Family: none) | 1-4,7-10<br>5,6 |
| Y | JP 2007-213866 A (Nissan Motor Co., Ltd.), 23 August 2007 (23.08.2007), claims 1 to 17; paragraphs [0042] to [0066] (Family: none) | 5,6 |
| E,X | JP 2012-49001 A (Toyota Motor Corp.), 08 March 2012 (08.03.2012), claims 1 to 4; examples; drawings (Family: none) | 1,7-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 April, 2012 (12.04.12) | 24 April, 2012 (24.04.12) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2012/000467 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2006-24415 A (Sony Corp.),<br>26 January 2006 (26.01.2006),<br>claims 1 to 6; full specifications<br>(Family: none) | 1-10 |
| A | WO 2010/043884 A2 (ITI SCOTLAND LTD.),<br>22 April 2010 (22.04.2010),<br>claims 1 to 17; full descriptions<br>& EP 2338191 A          & CN 102177607 A<br>& JP 2012-508429 A | 1-10 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04202024 A
- JP 2002109955 A
- JP 2005228570 A
- JP 2008226639 A
- JP 2010095390 A
- JP 2006032143 A
- JP 7330312 A
- WO 07066539 A

**Non-patent literature cited in the description**

- **S.J. SANG ; S.H. JOO ; R. RYOO.** *J. Am. Chem. Soc.,* 2000, vol. 122, 10712-10713
- **T. YOKOI ; Y. SAKAMOTO ; O. TERASAKI.** *J. Am. Chem. Soc.,* 2006, vol. 128, 13664-13665